(19) Europäisches Patentamt
European Patent Office
Office européen des brevets

(11) Veröffentlichungsnummer: **0 056 156**
**B1**

(12) # EUROPÄISCHE PATENTSCHRIFT

(45) Veröffentlichungstag der Patentschrift: **21.11.84**

(51) Int. Cl.³: **C 08 J 5/10**, C 08 L 21/00

(21) Anmeldenummer: **81110810.9**

(22) Anmeldetag: **29.12.81**

(54) **Verfahren zur Erhöhung der Haftfestigkeit zwischen Kautschuk und Metallen.**

(30) Priorität: **10.01.81 DE 3100572**

(43) Veröffentlichungstag der Anmeldung: **21.07.82 Patentblatt 82/29**

(45) Bekanntmachung des Hinweises auf die Patenterteilung: **21.11.84 Patentblatt 84/47**

(84) Benannte Vertragsstaaten: **AT BE DE FR GB IT NL**

(56) Entgegenhaltungen:
**GB - A - 993 045**

**GUMMI, ASBEST, KUNSTSTOFFE, Band 29, November 1976, Seiten 749-757, Stuttgart, DE. W.E. WEENING: "Bindung von Kautschuk auf Stahlcord", Seite 752, Absatz 3.1**

(73) Patentinhaber: **BAYER AG, Konzernverwaltung RP Patentabteilung, D-5090 Leverkusen 1 Bayerwerk (DE)**

(72) Erfinder: **Schubart, Rüdiger, Dr., An der Engelsfuhr 27, D-5060 Bergisch-Gladbach (DE)**
Erfinder: **Magg, Hans, Dr., Reginharstrasse 2, D-5060 Bergisch-Gladbach (DE)**
Erfinder: **Albrecht, Klaus-Dieter, Dr., Willi-Baumeister-Strasse 3, D-5090 Leverkusen 1 (DE)**

**EP 0 056 156 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Erhöhung der Haftfestigkeit zwischen Kautschuk und Metallen, wobei Cobaltphenolate dem Kautschuk zugesetzt werden.

Viele technische Gummiartikel, beispielsweise Luftreifen, Förderbänder oder Hochdruckschläuche sind mit verstärkenden Einlagen aus hochkohlenstoffhaltigem Stahl, der häufig in Form von Stahlcorden verwendet wird, ausgestattet.

Um eine gute Leistungsfähigkeit und Lebensdauer der Gegenstände zu gewährleisten, ist eine starke und dauerhafte Bindung zwischen Metall und Gummi erforderlich.

Diese läßt sich ohne ein weiteres Klebemittel nur erzielen, wenn die Filamente des Stahlcordes mit einer dünnen Schicht aus $\alpha$-Messing oder einer anderen Legierung mit den Hauptbestandteilen Kupfer und Zink oder aus reinem Zink plattiert sind.

Der so ausgerüstete Cord wird direkt in die in der Regel besonders haftfördernde Zusätze enthaltende Gummimischung einvulkanisiert.

Die gebräuchlichsten Zusätze zur Verbesserung der Bindekraft, im folgenden als »Haftmittel« bezeichnet, lassen sich nach ihrem chemischen Aufbau in zwei Gruppen einteilen.

Die erste Gruppe umfaßt alle Haftmittel, die nur als Mehrkomponentensystem wirksam sind. Ihnen ist gemeinsam, daß sie hochaktive Kieselsäuren enthalten.

Die weiteren Komponenten sind Resorcin oder Resorcin-Formaldehydkondensationsprodukte und Formaldehyd abspaltende Verbindungen, wie Hexamethylentetramin, veretherte oder veresterte Methylolmelamine mit verschiedenen Veretherungsgraden bzw. Veresterungsgraden und deren Kondensationsprodukte (DE-AS 1 301 475, DE-AS 1 301 478).

Diese Systeme liefern zwar gute Haftwerte, verursachen jedoch manchmal während der Vulkanisation Dämpfe und Geruchsbelästigung. Ferner wird in erheblichem Maße die Verarbeitbarkeit in den Mischmaschinen, z. B. auf dem Walzenmischer beeinträchtigt, da das Resorcin, besonders bei Temperaturen in der Nähe des Schmelzpunktes, zur Sublimation neigt.

Zur zweiten Gruppe sind metallorganische Verbindungen zu zählen, wobei die Verbindungen des Cobalts überwiegen. Vor allem Cobaltseifen, wie sie in der Lackindustrie auch als Sikkative gebräuchlich sind, werden seit längerer Zeit verwendet.

So werden in der FR-PS 1 323 934 (& GB-A-993 045) verschiedene Cobaltsalze, z. B. Cobaltstearat, Cobaltlinolat oder Cobaltnaphthenat erwähnt. Auch bororganische Cobaltverbindungen, entsprechend der US-Patentschrift Nr. 3 296 242, sind geeignet. Neben Cobalt kommen als Metalle auch Kupfer, Nickel, Blei oder Zink in Betracht (vgl. DE-OS 2 303 674 oder US-PS 4 154 911).

In ihrer Wirkung bestehen deutliche Unterschiede zwischen den Haftmitteln der ersten und denen der zweiten Gruppe.

Metallorganische Verbindungen, der Kautschukmischung zugesetzt, führen in der Regel nach der Vulkanisation zu der besseren Metall-Gummihaftung und können außerdem die Korrosion des metallischen Trägers nachhaltig verzögern.

Ihr wesentlichster Nachteil liegt jedoch darin, daß insbesondere bei der Hochtemperaturvulkanisation (180—240° C) die Haftfestigkeit stark zurückgeht. Auch macht sich die Reversion stark nachteilig bemerkbar.

Bei den Haftmitteln der ersten Gruppe besteht dagegen bessere Resistenz der Gummi-Metallbindung gegen Nachheizvorgänge. Auch sind solche Verbunde gegen Wärme und Feuchtigkeitseinflüsse verhältnismäßig unempfindlich.

Häufig werden deshalb auch Haftmittelkombinationen den Haftmischungen zugesetzt, wobei entweder einzelne Komponenten eines Haftsystems oder das Haftsystem insgesamt eingesetzt werden kann (DE-OS 1 720 144; DE-OS 2 841 401).

Es besteht Interesse an einem Haftsystem, das nach längerer Hitzealterung möglichst geringe oder keine Reversion zeigt und das dabei zu keinem oder nur geringerem Haftverlust führt.

Es wurde nun überraschend gefunden, daß die Hafteigenschaften zwischen Kautschuk und Metallen, sei es Rohstahl, vermessingter oder verzinkter Stahl, wesentlich erhöht und gute Alterungs- und Reversionsbeständigkeit erhalten werden können, wenn eine Verbindung der Formeln

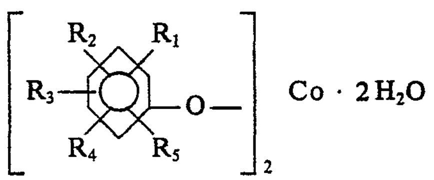 (1)

oder

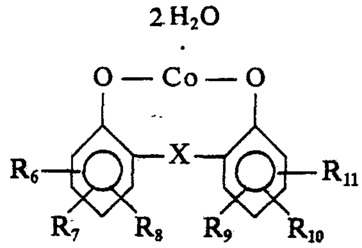

(2)

dem Kautschuk in Mengen von 0,1 bis 20 Gew.-Teilen, bevorzugt 0,3 bis 10 Gew.-Teilen, insbesondere 0,5 bis 5 Gew.-Teilen pro 100 Gew.-Teile Kautschuk zugesetzt wird.

Dabei zeigen diese Verbindungen nicht die Nachteile der bereits erwähnten metallhaltigen Haftmittel.

Eine zusätzliche Erhöhung der Haftfestigkeit läßt sich erreichen, wenn außer den Verbindungen der Formeln (1) und (2) eine Formaldehyd abgebende Verbindung den Kautschuk in Mengen von 0,01 bis 10 phr, bevorzugt 1—3 phr zugesetzt wird.

Darüber hinaus können auch Resorcin oder seine Derivate wie zum Beispiel Dimethoxybenzol, Diacetoxybenzol, Dibenzoyloxybenzol, Dipropoxybenzol, Dipropionyloxybenzol, Di(Trimethylsilyloxy)benzol, sowie Sulfoester, Phosphorsäureester, Phosphorigsäureester und Urethane sowie Carbonate des Resorcins in Mengen von 0,01 bis 10 Gew.-Teilen, bevorzugt 0,5 bis 5 Gew.-Teilen, pro 100 Gew.-Teile Kautschuk, dem Kautschuk zugesetzt werden.

Dabei kann die Resorcinverbindung getrennt oder in Kombination mit der Formaldehyd abgebenden Verbindung dem Kautschuk zugesetzt werden. Weiterhin ist es auch möglich, mit Formaldehyd vorkondensiertes Resorcin in Mengen von 0,01 bis 10 Gew.-Teilen, bevorzugt 3—5 Gew.-Teilen pro 100 Gew.-Teile Kautschuk zuzugeben, wobei pro Mol Resorcin 1—3 Mol Formaldehyd im Vorkondensat vorliegen.

Weiterhin kann Kieselsäure in den üblichen Mengen zugegeben werden.

Die Reste $R_1$ bis $R_{11}$ der Formeln 1 und 2 können gleich oder verschieden folgende Bedeutung besitzen:

Wasserstoff, Hydroxi, $C_1—C_{18}$-Alkyl, $C_5—C_{12}$-Cycloalkyl, $C_1—C_{16}$-Alkylthio, $C_6—C_{14}$-Aryl, $C_6—C_{14}$-Aryl-$C_1—C_4$-alkyl, $C_1—C_{18}$-Alkoxy, $C_5—C_{12}$-Cycloalkoxi, $C_6—C_{14}$-Aryloxi, $C_6—C_{14}$-Aryl-$C_1—C_4$-alkyloxi, Halogen (Cl, Br, J, bevorzugt Cl).

Bevorzugt in der Formel 1 stellen die Reste $R_1$, $R_2$, $R_4$ und $R_5$ Wasserstoff sowie $R_3$ $C_6—C_{12}$-Alkyl oder $C_6—C_{14}$-Aryl-$C_1—C_4$-alkyl dar.

Bevorzugt in der Formel 2 stellen die Reste $R_6$, $R_7$, $R_{10}$ und $R_{11}$ Wasserstoff, die Reste $R_8$ und $R_9$ $C_1—C_4$-Alkyl, Benzyl, Halogen oder $R_6$, $R_8$, $R_9$ und $R_{11}$ stellen $C_1—C_4$-Alkyl oder Halogen dar und die Reste $R_7$ und $R_{10}$ Wasserstoff, $C_1—C_4$-Alkyl, Phenyl oder Halogen.

X bedeutet $C_1—C_4$-Alkylen wie Methylen, Ethyliden, Propyliden, Butyliden, Schwefel, Dithio, Sauerstoff, N-$C_1—C_4$-Alkyl.

Die Verbindungen der Formeln 1 und 2 können als Isomerengemisch vorliegen.

Im einzelnen können die Reste $R_1$ bis $R_{11}$ folgende Bedeutung annehmen:

Wasserstoff, Methyl, Ethyl, Propyl, iso-Propyl, n-Butyl, sec.-Butyl, iso-Butyl, tert.-Butyl, n-Pentyl, iso-Pentyl, sec.-Pentyl, Neopentyl, n-Hexyl, iso-Hexyl, sec.-Hexyl, Cyclohexyl, n-Heptyl, iso-Heptyl, tert.-Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, Methyl-cyclohexyl, Cyclohexylmethyl, Naphthyl, Anthracenyl, Naphthylmethyl, Cycloheptyl, Cyclooctyl, Phenyl, Benzyl, Cyclononyl, Cyclodecyl, Cycloundecyl, Cyclododecyl.

Als Alkoxi und Alkyl-thio können entsprechende Reste wie unter Alkyl, lediglich mit Sauerstoff oder Schwefel verlängert, genannt werden.

Beispielhaft seien folgende Verbindungen genannt:

Die Verbindungen 2 bis 43 können sowohl in o-, m-, p-Form als auch als Isomerengemisch vorliegen.

| | |
|---|---|
| Bis-(Phenoxi)-cobalt-Dihydrat | 1 |
| Bis-(Methyl-phenoxi)-cobalt-Dihydrat | 2 |
| Bis-(Ethyl)-phenoxi)-cobalt-Dihydrat | 3 |
| Bis-(Propyl-phenoxi)-cobalt-Dihydrat | 4 |
| Bis-(Isopropyl-phenoxi)-cobalt-Dihydrat | 5 |
| Bis-(Butyl-phenoxi)-cobalt-Dihydrat | 6 |
| Bis-(Pentyl-phenoxi)-cobalt-Dihydrat | 7 |
| Bis-(tert.-Butyl-phenoxi)-cobalt-Dihydrat | 8 |
| Bis-(iso-Butyl-phenoxi)-cobalt-Dihydrat | 9 |
| Bis-(sec.-Butyl-phenoxi)-cobalt-Dihydrat | 10 |
| Bis-(Hexyl-phenoxi)-cobalt-Dihydrat | 11 |

| | |
|---|---|
| Bis-(Heptyl-phenoxi)-cobalt-Dihydrat | 12 |
| Bis-(Octyl-phenoxi)-cobalt-Dihydrat | 13 |
| Bis-(2-Ethylheptyl)-phenoxi-cobalt-Dihydrat | 14 |
| Bis-(Nonyl-phenoxi)-cobalt-Dihydrat | 15 |
| Bis-(Decyl-phenoxi)-cobalt-Dihydrat | 16 |
| Bis-(Undecyl-phenoxi)-cobalt-Dihydrat | 17 |
| Bis-(Dodecyl-phenoxi)-cobalt-Dihydrat | 18 |
| Bis-(Tridecyl-phenoxi)-cobalt-Dihydrat | 19 |
| Bis-(Tetradecyl-phenoxi)-cobalt-Dihydrat | 20 |
| Bis-(Pentadecyl-phenoxi)-cobalt-Dihydrat | 21 |
| Bis-(Hexadecyl-phenoxi)-cobalt-Dihydrat | 22 |
| Bis-(Heptadecyl-phenoxi)-cobalt-Dihydrat | 23 |
| Bis-(Phenyl-phenoxi)-cobalt-Dihydrat | 24 |
| Bis-(Benzyl-phenoxi)-cobalt-Dihydrat | 25 |
| Bis-(Naphthyl-phenoxi)-cobalt-Dihydrat | 26 |
| Bis-(Cyclohexyl-phenoxi)-cobalt-Dihydrat | 27 |
| Bis-(Cycloheptyl-phenoxi)-cobalt-Dihydrat | 28 |
| Bis-(Cyclononyl-phenoxi)-cobalt-Dihydrat | 29 |
| Bis-(Cyclodecyl-phenoxi)-cobalt-Dihydrat | 30 |
| Bis-(Cycloundecyl-phenoxi)-cobalt-Dihydrat | 31 |
| Bis-(Cyclododecyl-phenoxi)-cobalt-Dihydrat | 32 |
| Bis-(Phenoxylphenoxi)-cobalt-Dihydrat | 33 |
| Bis-(Butyloxi-phenoxi)-cobalt-Dihydrat | 34 |
| Bis-(Methoxi-phenoxi)-cobalt-Dihydrat | 35 |
| Bis-(Decyloxi-phenoxi)-cobalt-Dihydrat | 36 |
| Bis-(Benzyloxi-phenoxi)-cobalt-Dihydrat | 37 |
| Bis-(Chlor-phenoxi)-cobalt-Dihydrat | 38 |
| Bis-(Cyclohexyloxi-phenoxi)-cobalt-Dihydrat | 39 |
| Bis-(Phenyl-thio-phenoxi)-cobalt-Dihydrat | 40 |
| Bis-(Methylthio-phenoxi)-cobalt-Dihydrat | 41 |
| Bis-(Butylthio-phenoxi)-cobalt-Dihydrat | 42 |
| Bis-(hydroxiphenoxi)-cobalt-Dihydrat | 43 |
| (5,5'-Dimethyl-diphenylmethan-2,2'-dihydroxi)-cobalt-Dihydrat | 44 |
| (5,5'-Dichlor-diphenylmethan-2,2'-dihydroxi)-cobalt-Dihydrat | 45 |
| (5,5',3,3'-Tetramethyl-diphenylmethan-2,2'-dihydroxi)-cobalt-Dihydrat | 46 |
| (5,5',3,3'-Tetramethyl-diphenyl-(1,1-isobutan)-2,2'-dihydroxi)-cobalt-Dihydrat | 47 |
| (5,5'-Dimethyl-diphenyloxid-2,2'-dihydroxi)-cobalt-Dihydrat | 48 |
| (5,5'-Di-cyclohexyl-diphenylmethan-2,2'-dihydroxi)-cobalt-Dihydrat | 49 |
| Bis-(2-napthoxi)-cobalt-Dihydrat | 50 |
| Bis-(2,4-di-tert.-Butyl-phenoxi)-cobalt-Dihydrat | 51 |
| (5,5'-Di-nonyl-diphenyl-sulfid-2,2'-dihydroxi)-cobalt-Dihydrat | 52 |
| 3,3',5,5'-Tetramethyl-diphenylsulfid-2,2'-dihydroxi)-cobalt-Dihydrat | 53 |
| 3,3',5,5'-Tetramethyl-diphenyl-disulfid-2,2'-dihydroxi)-cobalt-Dihydrat | 54 |
| Brenzkatechin-cobalt-Dihydrat | 55 |
| Bis-(3-nonyl-2-hydroxi-phenyl)-methan-cobalt-Dihydrat | 56 |
| Bis-(4-nonyl-2-hydroxiphenyl)-methan-cobalt-Dihydrat | 57 |
| 3-Phenylbrenzkatechin-cobalt-Dihydrat | 58 |

Die Produkte der Formel 1 und 2 werden hergestellt, indem man ein Co-Salz einer geeigneten Säure mit dem entsprechenden gegebenenfalls substituierten Phenol ohne Lösungsmittel vermischt und die Mischung langsam erhitzt. Die Temperatur der Mischung wird dabei so langsam gesteigert, daß zunächst nur Wasser aus dem Kristallwasseranteil des Co-Salzes abgespalten wird und bei weiterer Temperatursteigerung bis zum Temperaturbereich von 220—350°C, bevorzugt 220—270°C, unter Abspaltung der durch das geeignete gegebenenfalls substituierte Phenol in der Hitze verdrängten in der Regel tiefer siedenden, also leichter flüchtigen Säure, die aber auch unter den Reaktionsbedingungen decarboxilieren kann und somit in Form von Kohlendioxid und gegebenenfalls auch von Ketonen oder Kohlenwasserstoffen abgespalten werden kann, sich das Produkt der Formel 1 bzw. 2 bildet. Geeignete Co-Salze für diesen Prozeß sind Co-Formiat, Co-Acetat, Co-Propionat, Co-Butyrat usw. Als Phenole werden für diesen Herstellungsprozeß diejenigen eingesetzt, die den in der Tabelle angegebenen Produkten zugrundeliegen. In der Regel werden die Komponenten stöchiometrisch eingesetzt. Doch kann, um die Umsetzung zu beschleunigen, ein geringer Überschuß an substituiertem Phenol bis zu 10 Gew.-% verwendet werden, das nach vollzogener Umsetzung im Vakuum wieder abdestilliert, aber auch zur Absenkung von hochliegenden Schmelzpunkten im Produkt verbleiben kann. Ein gewisser Überschuß an substituiertem Phenol empfiehlt sich auch dann, wenn unter den Reaktionsbedingungen teilweise Entalkylierung des substituierten Phenols eintreten kann.

Die Produkte fallen in der Regel als Dihydrate an, können jedoch bei längerem Erhitzen auf den oberen Temperaturbereich (~270° C) Kristallwasser verlieren.

Die Struktur der Produkte wurde mit Hilfe der ESR- und ESCA-Spektroskopie gesichert.

Die Produkte können mit Wasser quantitativ in die zugrundeliegenden substituierten Phenole und Co-Hydroxide zersetzt werden. Im Falle unvollständiger Umsetzung findet man auch noch etwas nicht umgesetztes Co-Salz.

Zum Schutz gegen Hydrolyse können die Produkte auch bei verschiedener Teilchengröße mit Wasser abweisenden Stoffen wie z. B. Paraffinöl, Wachs oder wasserabweisenden Polymeren in üblicher Weise umhüllt werden.

Beispielhaft für die Herstellung dieser Produkte sei die Synthese des o-, m-, p-Nonylphenoxi-Co-Dihydrat-Isomerengemisches angegeben.

1155 g Nonylphenol werden mit 622,5 g käuflichem Co-Acetat vermischt und unter Rühren langsam erhitzt. Zunächst scheidet sich Kristallwasser ab, später Essigsäure. Die Innentemperatur wird dabei bis 250° C gesteigert. Bei dieser Temperatur wird so lange gerührt, bis eine tief-marineblaue völlig homogene Flüssigkeit entstanden ist. Es wird auf 200° C abgekühlt, im Vakuum überschüssiges Nonylphenol abgezogen und im Vakuum völlig abgekühlt. Das Produkt erstarrt bei 110—115° C.

Die schwefelüberbrückten Bisphenol-Co-Produkte lassen sich dagegen leicht in wäßriger oder wäßrig/alkoholischer Lösung aus dem entsprechenden Bisphenol, einem Co-Salz und der entsprechenden Menge Natronlauge herstellen. Beispielsweise sei die Herstellung des 3,3',5,5'-Tetramethyldiphenylsulfid-2,2'-dihydroxi-cobalt-dihydrats beschrieben.

Eine Lösung aus 274 g 3,3',5,5'-Tetramethyl-2,2'-dihydroxi-diphenylsulfid und 80 g Natriumhydroxid in 600 ml Wasser wurde bei Raumtemperatur zu 249 g Co-Acetat mit 4 $H_2O$ in 800 ml Wasser getropft. Es wurde zwei Stunden nachgerührt, abgesaugt, gewaschen und im Vakuum getrocknet. Man erhielt 351 g Produkt vom Schmp. >300° C.

Analog lassen sich entsprechende anders substituierte Bisphenolsulfide und Bisphenoldisulfide umsetzen.

Unter Formaldehyd abspaltenden Verbindungen sich solche Substanzen zu verstehen, die beim Erhitzen, z. B. bei Temperaturen im Bereich von 40 bis 200° C, insbesondere unter Vulkanisationsbedingungen, gegebenenfalls in Gegenwart von Wasser, Formaldehyd abspalten können. Bei Verwendung von Methylolethern oder Methylolestern können auch Kondensationsreaktionen unter Abspaltung von Alkoholen oder Säuren eintreten. Im folgenden sollen diese Produkte kurz als »Formaldehyd-Abspalter« bezeichnet werden.

Als Beispiele der Formaldehyd-Abspalter seien folgende genannt: Trimeres Methylenaminoacetonitril, 1-Aza-3,7-dioxabicyclo[3,3,0]octan oder Oxazolidine, Bis-(1,3-oxazolidino)-methan, Octahydro-1,3-benzoxazol, Tetrahydro-1,3-oxazin, Dialkylaminomethylalkylether, Diallylamino-methylalkylether (vgl. z. B. belgische Patentschrift 621 923), wie z. B. 4,4-Dimethyl-1,3-oxazolidin, Bis-(4,4-dimethyl-1,3-oxazolidino)-methan, N-n-Butyl-5(6)-cyanooctahydro-1,3-benzoxazol, 3-n-Butyltetrahydro-1,3-oxazin, Diisopropylaminomethyl-ethylether, Diallyl-aminomethyl-ethylether, Hexa-(methoxymethyl)-melamin, N-Methylolcarbonsäureamide, wie z. B. N-Methylolacetamid, N-Methylolbutyramid, N-Methylolacrylamid, N-Methylolmethacrylamid, N-Methylolsuccinimid, N-Methylolmaleinsäureimid.

Beispiele weiterer Formaldehyd-Abspalter sind: 1,8-Di-(methylenamino)-p-methan oder Azomethine, wie $\alpha,\alpha$-Dimethyl-benzyl-azomethin (vgl. US-Patentschrift 2 512 128) oder Cyclotrimethylentriamine, z. B. N,N',N''-Trimethyl-cyclotrimethylentriamin oder N,N',N''-Triethyl-cyclotrimethylentriamin, an den beiden N-Atomen disubstituierte Diaminomethan, z. B. Bis-[di-(cyanomethyl)-amino]-methan oder Bis-(diallylamino)-methan, an den beiden N-Atomen substituierte Imidazoline, wie N,N''-Diphenyl-imidazolidin oder N,N'-Dibenzyl-imidazolidin, oder an den beiden N-Atomen substituierte Hexahydropyrimidine, z. B. N,N'-Di-n-hexal-hexahydropyrimidin (vgl. belgische Patentschrift 624 519).

Weitere erfindungsgemäß verwendete Formaldehyd-Abspalter sind Methylolmelamine, wie Hexamethylol-melamin, dessen Hydroxylgruppen gegebenenfalls alle oder teilweise verethert oder verestert sind. Das verwendete Hexamethylolmelamin braucht nicht in reiner Form vorzuliegen, sondern es können auch Produkte verwendet werden, die einen etwas geringeren Gehalt an Formaldehyd besitzen oder die einen Gehalt an höhermolekularen Kondensationsprodukten aufweisen. Die Herstellung des Hexamethylolmelamins kann in bekannter Weise erfolgen, z. B. durch Umsatz von ungefähr 1 Mol Melamin mit ungefähr 6 Mol wäßriger Formaldehydlösung (vgl. »Helvetica chimica acta«, 24, S. 315 E, schweizerische Patentschrift 197 486 und Houben—Weyl, »Methoden der organischen Chemie«, Bd. 8, S. 242).

An Stelle des Hexamethylolmelamins können auch, wie bereits erwähnt, dessen Ester oder Ether, die als verkappte Methylolverbindungen anzusehen sind, eingesetzt werden. Geeignet sind im vorliegenden Fall wie auch in den nachfolgend angegebenen Fällen die Verwendung von Ethern oder Estern insbesondere die niederen Alkylether, wie beispielsweise Methyl-, Ethyl-, Propyl-, Butyl- und Allylether, wobei eine bis sechs Hydroxylgruppen verethert sein können. Als Ester seien insbesondere die niederen aliphatischen Carbonsäureester, wie Acetate und Propionate, erwähnt. Weiterhin können natürlich auch Methylolmelamine verwendet werden, die pro Mol höchstens fünf, vorzugsweise drei bis fünf Methylolgruppen enthalten, wobei die Methylolgruppen alle oder teilweise verethert oder verestert sein können. Die Herstellung der Verbindungen erfolgt nach bekannten Methoden durch

Umsetzung von Melamin mit der jeweils gewünschten Formaldehydmenge und gegebenenfalls durch Veretherung bzw. Veresterung der so erhaltenen Methylol-Verbindungen (vgl. Houben—Weyl, »Methoden der organischen Chemie«, Bd. 8, S. 358). Im allgemeinen werden bei diesen Verfahren nicht chemisch einheitliche Verbindungen erhalten, sondern Gemische verschiedenartiger Methylol-Verbindungen, die ebenfalls verwendet werden können. Für die Ester und Ether gilt analog das für das Hexamethylolmelamin gesagte. Beispiele derartiger Verbindungen sind: Pentamethylolmelamin-acetat und Pentamethylolmelamin-propionat.

Verwendet werden kann weiterhin Tetramethylolhydrazodicarbonamid, dessen Hydroxylgruppen gegebenenfalls alle oder teilweise verethert oder verestert sind. Vorzugsweise wird das Tetramethylolhydrazodicarbonamid, das durch Umsetzung von Hydrazodicarbonamid mit 4 Mol Formaldehyd erhalten wird (vgl. Houben—Weyl, »Methoden der organischen Chemie«, Bd. 14/2, S. 352), in kristallisierter Form angewandt. An Stelle der reinen Verbindung (F. 149° C) können jedoch auch harzartige Kondensationsprodukte, die mehr oder weniger Formaldehyd enthalten, verwendet werden. Beispiele der Ester und Ether sind: Tetramethylol-hydrazodicarbonamid-acetat und -propionat.

Außerdem können folgende Verbindungen als Formaldehyd-Abspalter verwendet werden: Tetramethylol-acetylen-diharnstoff, dessen Hydroxylgruppen gegebenenfalls alle oder teilweise verethert oder verestert sind. Der Tetramethylol-acetylen-diharnstoff braucht nicht in reiner Form vorzuliegen, sondern es können auch Produkte verwendet werden, die einen etwas geringeren Gehalt an Formaldehyd besitzen oder die einen Gehalt an höhermolekularen Kondensationsprodukten aufweisen. Die Herstellung des Tetramethylol-acetylen-diharnstoffs kann in bekannter Weise erfolgen, z. B. nach Houben—Weyl, »Makromolekulare Chemie«, 2, S. 353, Beispiele der Ester und Ether sind: Tetramethylol-acetylen-diharnstoff-tetramethylether, Tetramethylol-acetylen-diharnstoff-tetraacetat, Formaldehyd abspaltende Methylolverbindungen, insbesondere N-Methylolverbindungen sowie deren Derivate, in denen die Hydroxylgruppen gegebenenfalls alle oder teilweise verethert oder verestert sind, wie z. B. N,N'-Dimethylol-harnstoff, Dimethylol-harnstoff-dimethylether, N,N'-Dimethylol-urondimethylether, Methylen-bis-(methylol-harnstoff-methylether), Dimethylol-harnstoff-di-n-butylether.

Ebenfalls können N-substituierte 1,3,5-Dioxazine, die am Stickstoffatom durch gerade oder verzweigte, gesättigte oder ungesättigte, gegebenenfalls substituierte Alkyl-, Cycloalkyl-, Aryl- oder Aralkyl-Reste substituiert sein können, wobei der Substituent auch weitere Dioxazin-Ringe enthalten kann, verwendet werden. Beispiele derartiger Verbindungen sind: N-Allyl-, N-Butyl-, N-Isobutyl-, N-Cyclohexyl-, N-Phenyl-, N-($\beta$-Hydroxyethyl)-, N-Essigsäure-ethyl-ester-1,3,5-dioxazin oder N,N'-Ethylen-bis-(1,3,5-dioxazin).

Die Dioxazine können in bekannter Weise durch Umsetzung der betreffenden Amine mit einem Überschuß von Formaldehyd hergestellt werden. An Stelle der reinen Verbindungen können auch die bei einer derartigen Herstellung anfallenden Gemische mit Kondensationsprodukten, die mehr oder weniger Formaldehyd enthalten, verwendet werden.

Auch Paraformaldehyd oder Hexamethylentetramin können verwendet werden. Besonders hohe Haftungen wurden erzielt mit:

Hexamethylolmelamin, Hexamethylolmelamin-pentamethylether, Gemisch von
Hexamethylolmelamin-tetramethylether und -trimethylether,
Pentamethylolmelamin-trimethylether, Tetramethylolhydrazodicarbonamid,
Tetramethylol-acetylen-diharnstoff, N,N'-Dimethylol-harnstoff, N-Methylol-dicyandiamid,
Methylenamino-acetonitril, N-Allyl-dioxazin, N-Phenyl-dioxazin,
1-Aza-3,7-di-oxa-bicyclo[3,3]octan, Hexamethylentetramin.

Die mit obiger Haftmittel-Kombination versehenen Kautschukmassen führen zu ausgezeichneten Hafteigenschaften gegenüber Eisen, Kupfer, Messing, Zink, Bronze, Aluminium und anderer Verstärkermetalle. Typische Kautschukarten, die sich für solche Haftmischungen einsetzen lassen, sind Kautschuke vom Dien-Typ wie Naturkautschuk, Polyisopren, Polybutadien, Styrolbutadien-Copolymere, Acrylnitril-Butadien-Kautschuk, Chloropren-Kautschuk, EPDM und Mischungen dieser genannten Typen.

Die Kautschukmischungen sollen die üblichen Bestandteile, zu denen verstärkende Ruße, inaktive und aktive Füllstoffe, wie beispielsweise Kieselsäuren und Zinkoxid, Verarbeitungshilfsmittel, Schwefel und Vulkanisationsbeschleuniger enthalten.

Als Beschleuniger eignen sich besonders Sulfenamide, die sich vom 2-Mercaptobenzthiazol ableiten, wie beispielsweise N-Cyclohexyl-thiobenzthiazol, N-Morpholino-thiobenzthiazol, N,N-Dicyclohexyl-thiobenzthiazol. Natürlich können auch andere Beschleuniger allein oder in Kombination verwendet werden. Beispiele sind Thiurame, Mercaptobenzthiazol oder Dithiocarbamate.

Auch die Zugabe von Vulkanisationsverzögerern ist möglich. Schließlich stellen die erfindungsgemäßen Cobaltverbindungen selbst Beschleuniger dar, die somit auch ohne zusätzlich beschleunigende Komponente einsetzbar sind (vgl. DE-OS 2 736 680).

Die Vulkanisationstemperatur wird in praxisgerechter Weise ausgewählt, z. B. 120—220° C, bevorzugt 140—180° C.

Die Vorteile der vorliegenden Erfindung bei der Herstellung von hochfesten Verbindungen zu Stahlseilen oder Stahlcorden mit unbehandelter vermessingter, verzinkter oder blanker Oberfläche werden durch die folgenden Beispiele erläutert.

Dabei wird von folgenden Mischungszusammensetzungen ausgegangen:

Mischung A:

| | |
|---|---|
| Naturkautschuk (RSS 1) | 60 Gew.-Teile |
| Poly-cis-Butadien | 40 Gew.-Teile |
| aktive Kieselsäure | 15 Gew.-Teile |
| Ruß N 330 | 35 Gew.-Teile |
| Zinkoxid | 6 Gew.-Teile |
| Stearinsäure | 1 Gew.-Teil |
| Phenyl-β-Naphthylamin | 1 Gew.-Teil |
| aromat. Mineralölweichmacher | 4 Gew.-Teile |
| Kolophonium | 2 Gew.-Teile |
| Schwefel | 4 Gew.-Teile |
| N,N-Dicyclohexyl-thiobenzthiazol | 0,7 Gew.-Teile |

Mischung B:

| | |
|---|---|
| Naturkautschuk (RSS 1) | 60 Gew.-Teile |
| Poly-cis-Butadien | 40 Gew.-Teile |
| Ruß N 330 | 55 Gew.-Teile |
| Zinkoxid | 6 Gew.-Teile |
| Stearinsäure | 1 Gew.-Teil |
| Phenyl-β-Naphthylamin | 1 Gew.-Teil |
| aromat. Mineralölweichmacher | 4 Gew.-Teile |
| Kolophonium | 2 Gew.-Teile |
| Schwefel | 4 Gew.-Teile |
| N,N-Dicyclohexyl-thiobenzthiazol | 0,7 Gew.-Teile |

Mischung C:

| | |
|---|---|
| Naturkautschuk (RSS 1) | 100 Gew.-Teile |
| Ruß N 330 | 55 Gew.-Teile |
| Zinkoxid | 6 Gew.-Teile |
| Stearinsäure | 1 Gew.-Teil |
| Phenyl-β-Naphthylamin | 1 Gew.-Teil |
| aromat. Mineralölweichmacher | 4 Gew.-Teile |
| Kolophonium | 2 Gew.-Teile |
| Schwefel | 4 Gew.-Teile |
| N,N-Dicyclohexyl-thiobenzthiazol | 0,7 Gew.-Teile |

Mischung D:

| | |
|---|---|
| Naturkautschuk (RSS 1) | 100 Gew.-Teile |
| Ruß N 326 | 43 Gew.-Teile |
| Ruß N 539 | 20 Gew.-Teile |
| Kolophonium | 3 Gew.-Teile |
| Phenyl-β-Naphthylamin | 1,5 Gew.-Teile |
| Zinkoxid | 10 Gew.-Teile |
| Schwefel | 7 Gew.-Teile |
| N,N-Dicyclohexyl-thiobenzthiazol | 0,7 Gew.-Teile |

Mischung A, B und C werden auf einem Laborwalzmischwerk bei einer Walzentemperatur von 40° C hergestellt.

Bei Mischung D wird die schwefel- und beschleunigerfreie Grundmischung in einem Labor-Innenmischer bei 70° C vorgemischt und anschließend Schwefel, Beschleuniger und gegebenenfalls Haftmittel auf einem Laborwalzmischwerk bei einer Walzentemperatur von 60° C nachgemischt.

Für die Prüfung der Haftung nach der T-Testmethode (vgl. Bayer-Mitteilungen für die Gummi-Industrie, Nr. 29, S. 69) werden Prüfkörper mit den Abmessungen 20 × 15 × 6 mm hergestellt.

Es werden Stahlcorde mit blanker, vermessingter und verzinkter Oberfläche in der Konstruktion 7 × 3 × 0,15 verwendet.

Die Vulkanisation der Prüfkörper erfolgt bei 150° C entsprechend dem $t_{90}$-Wert. Zur Prüfung der Reversionsbeständigkeit der Gummi-Stahlcordbindung wird bei 180° C 45 Minuten länger als dem $t_{90}$-Wert entspricht, vulkanisiert. Für die Alterung werden die Prüfkörper mehrere Tage lang im Geer-Ofen bei 100° C aufbewahrt oder auch einige Stunden dem Heißdampf bei 120° C ausgesetzt.

Die Haftwerte werden bei 80° C Prüftemperatur mit Hilfe eines Zugprüfgerätes bei einer Klemmenabzugsgeschwindigkeit von 100 mm/min ermittelt. Sie werden als die für das Herausreißen des Cordes aus der Gummiprobe erforderliche maximale Kraft in N/20 mm angegeben. Zu einer Messung werden mindestens 4 Prüfkörper mit gleichem Aufbau herangezogen, wobei aus diesen Einzelwerten der Mittelwert zur Auswertung gelangt.

## Beispiel 1

Im Beispiel 1 werden die Eigenschaften der beanspruchten Verbindungen bei der Haftung an vermessingtem Stahlcord dargestellt.

Tabelle 1

Einige repräsentative Cobaltphenolate in der Haftung an vermessingtem Stahlcord (Verwendung von Vulkanisation aus dem Mischungstyp B; der Cobaltgehalt beträgt 0,5 Gew.-Teile/100 Gew.-Teile Polymer).

| | Vulkanisation 150° C/$t_{90}$ Alterung — | 150° C/$t_{90}$ 3 d HL | 180° C/45 min — | 180° C/45 min 3 d HL | 180° C/45 min 8 h Dampf |
|---|---|---|---|---|---|
| — | 417 N/20 mm | 262 N/20 mm | 363 N/20 mm | 201 N/20 mm | |
| Cobaltnaphthenat (Vergleich) | 495 N/20 mm | 483 N/20 mm | 108 N/20 mm | 102 N/20 mm | <50 |
| Verbindung 44 | 434 N/20 mm | 316 N/20 mm | 278 N/20 mm | 293 N/20 mm | |
| Verbindung 47 | 440 N/20 mm | 323 N/20 mm | 415 N/20 mm | 416 N/20 mm | 166 |
| Verbindung 49 | 414 N/20 mm | 423 N/20 mm | 308 N/20 mm | 258 N/20 mm | |

HL . . . Heißluft

Tabelle 1 zeigt, daß bei entsprechend dem $t_{90}$-Wert vulkanisierten Prüfkörpern im allgemeinen auch ohne Haftzusätze bereits gute Haftniveaus erreicht werden.

Wenn jedoch der Haftmischung zusätzlich ein Haftmittel zugesetzt wird, erhält man wesentlich bessere Haftung des Gummis am Metall.

Unter den Bedingungen der Reversion und Alterung tritt aber bei Verwendung der gängigen Cobalthaftmittel rasch starke Schwächung der Bindung ein. Im Falle des Cobaltnaphthenats ist bei 45minütiger Vulkanisation bei 180° C das Resthaftniveau deutlich geringer als bei Proben ohne jeden Haftzusatz.

Im Gegensatz dazu sind die erzielbaren Resthaftwerte bei Vulkanisaten mit den beanspruchten Haftzusätzen wesentlich besser. Selbst wenn der Prüfkörper 8 Stunden lang im Heißdampf bei 120° C gelagert wird, kann beispielsweise bei Verbindung 47 die Resthaftung noch mit 166 N/20 mm angegeben werden, während bei Cobaltnaphthenat praktisch keine Haftung mehr vorhanden ist.

Noch deutlicher wird die Überlegenheit der beanspruchten Verbindungsgruppe gegenüber den als gegenwärtigen Stand der Technik anzusehenden Cobalthaftmitteln, wenn Mischungen mit hohen Schwefelgehalten, wie sie als Haftmischungen für die Gürteleinlagen von Radialreifen üblich sind und mit hohen Cobaltgehalten miteinander verglichen werden (Tabelle 2).

Tabelle 2

Haftvergleich von Cobaltphenolaten mit Cobaltnaphthenat in hochschwefelhaltigen Mischungen vom Mischungstyp D (Cobaltgehalt: 0,5 Gew.-Teile/100 Gew.-Teile NR).

| | Vulkanisation 150° C/$t_{90}$ Alterung — | 150° C/$t_{90}$ 5 d HL 100° C | 180° C/45 min — | 180° C/45 min 5 d HL 100° C |
|---|---|---|---|---|
| — | 411 N/20 mm | 291 N/20 mm | 274 N/20 mm | 239 N/20 mm |
| Cobaltnaphthenat (Vergleich) | 463 N/20 mm | 444 N/20 mm | 58 N/20 mm | 88 N/20 mm |
| Verbindung 15 | 469 N/20 mm | 429 N/20 mm | 314 N/20 mm | 287 N/20 mm |
| Verbindung 25 | 416 N/20 mm | 365 N/20 mm | 274 N/20 mm | 289 N/20 mm |
| Verbindung 18 | 458 N/20 mm | 398 N/20 mm | 303 N/20 mm | 184 N/20 mm |

In Mischungen mit hochaktiven Kieselsäuren wird ein ähnlich günstiges Wirkungsspektrum gefunden (Tabelle 3).

Tabelle 3

Trennfestigkeiten für einige Cobaltphenolate in Vulkanisaten mit hochaktiven Kieselsäuren (Mischungstyp A) (Cobaltgehalt: 0,5 Gew.-Teile/100 Gew.-Teile Kautschuk).

| | Vulkanisation 150° C/$t_{90}$ Alterung — | 180° C/45 min — | 180° C/45 min 3 d HL/100° C |
|---|---|---|---|
| Verbindung 52 | 392 N/20 mm | 193 N/20 mm | 207 N/20 mm |
| Verbindung 53 | 494 N/20 mm | 306 N/20 mm | 330 N/20 mm |
| Verbindung 54 | 427 N/20 mm | 301 N/20 mm | 264 N/20 mm |

Beispiel 2

Im Gegensatz zu der Haftung an vermessingtem Stahl sind für Artikel mit verzinkten Stahleinlagen haftverbessernde Zusätze in der Kautschukmischung unerläßlich.

Die Wirksamkeit hängt empfindlich von den Vulkanisationsbedingungen ab.

So tritt beispielsweise bei vielen marktüblichen Haftmitteln unter Übervulkanisationsbedingungen vollständiger Haftverlust ein.

Diesen Nachteil zeigen, wie aus Tabelle 4 hervorgeht, die beschriebenen Verbindungen nicht. Sie bewahren auch bei Vulkanisationszeiten von 45 Minuten bei 180° C ein hohes Haftniveau. Es liegt häufig um den Faktor 3—4 über dem mit Cobaltnaphthenat erzielbaren Wert.

Tabelle 4

Haftung an verzinkten Stahlcorden (0,5 Gew.-Teile Cobalt/100 Gew.-Teile Polymer).

| Haftzusatz | Cobalt-Gehalt | Mischung $t_{90}$ | 150° C | 180° C/45 min |
|---|---|---|---|---|
| – | – | D | 55 | |
| Co-Naphthenat (Vergleich) | 0,5 | B | 343 N/20 mm | 47 N/20 mm |
| Verbindung 50 | 0,5 | C | 305 N/20 mm | |
| Verbindung 57 | 0,5 | C | 335 N/20 mm | |
| Verbindung 49 | 0,5 | B | 305 N/20 mm | 158 N/20 mm |
| Verbindung 56 | 0,5 | B | 305 N/20 mm | 194 N/20 mm |
| Verbindung 54 | 0,5 | D | 313 N/20 mm | |
| Verbindung 15 | 0,5 | D | 375 N/20 mm | 160 N/20 mm |
| Verbindung 25 | 0,5 | D | 311 N/20 mm | 131 N/20 mm |
| Verbindung 18 | 0,5 | D | 339 N/20 mm | 128 N/20 mm |
| Verbindung 51 | 0,3 | D | | 106 N/20 mm |

Beispiel 3

Die beschriebenen Verbindungen bewirken auch bei Rohstahl gute Haftwerte (Tabelle 5).

Tabelle 5

Haftung an Rohstahlcord (Cobaltgehalt: 0,5 Gew.-Teile/100Gew.-Teile Polymer).

| Haftzusatz | Mischungstyp | Haftwert bei Vulkanisation 150° C/$t_{90}$ |
|---|---|---|
| Cobaltnaphthenat (Vergleich) | D | 62 N/20 mm |
| Verbindung 50 | C | 124 N/20 mm |
| Verbindung 25 | B | 106 N/20 mm |
| Verbindung 54 | B | 134 N/20 mm |
| Verbindung 47 | B | 165 N/20 mm |
| Verbindung 49 | B | 126 N/20 mm |
| Verbindung 15 | D | 112 N/20 mm |
| Verbindung 18 | D | 95 N/20 mm |

Beispiel 4

Das folgende Beispiel legt dar, daß vulkanisierbare Kautschukmischungen, die sowohl die genannten Cobaltphenolate als auch Formaldehyddonatoren auf Methylolmelaminbasis enthalten, sich besonders unter den Bedingungen der Alterung in Dampf und Heißluft besonders günstig verhalten.

Im Laborversuch, der nach dem beschriebenen Verfahren durchgeführt wurde, ergibt sich zum Beispiel für Verbindung 47 folgendes:

Die vulkanisierte Mischung ohne Methylolverbindung weist unmittelbar nach der Vulkanisation als Haftwert 430 N/20 mm auf. Dieser Wert verringert sich nach dreitätiger Heißluftalterung auf 369 N/20 mm. Bei Kautschukmischungen, die außerdem Resorcin und Methylolverbindung als Haftmittel enthalten, lauten die entsprechenden Zahlen dagegen: 423 N/20 mm vor Alterung und 406 N/20 mm nach Alterung.

Unter den Bedingungen: Alterung in Heißdampf bei 120° C werden die Unterschiede noch deutlicher. Methylolfreie, aber cobalthaltige Vulkanisate zeigen nach 15stündiger Alterung nur noch 25% ihres Anfangshaftwertes.

Mit Verbindung 47 als Cobaltkomponente und einem Methylolmelamingemisch, das hauptsächlich aus Hexamethylolmelaminpentamethylether besteht, ist der Haftwert aber nur auf 75% des Ausgangswertes abgefallen.

**Patentansprüche**

1. Verfahren zur Erhöhung der Haftfestigkeit zwischen Kautschuk und Metall durch Zugabe einer hafterhöhenden Verbindung, gegebenenfalls einer Formaldehyd abspaltenden Verbindung sowie gegebenenfalls einer Resorcinverbindung zum Kautschuk und anschließender Vulkanisation, dadurch gekennzeichnet, daß man als hafterhöhende Verbindung eine Verbindung der Formeln 1 oder 2

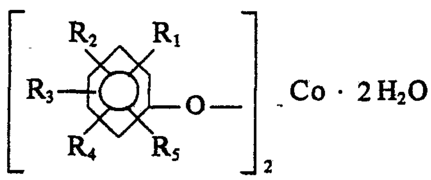

(1)

oder

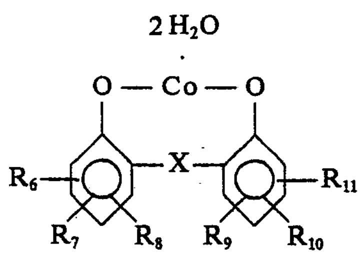

(2)

dem Kautschuk in Mengen von 0,1 bis 20 Gew.-Teilen pro 100 Gewichtsteile Kautschuk zusetzt, wobei die Reste

| | |
|---|---|
| $R_1$ bis $R_{11}$ | Wasserstoff, Hydroxi, $C_1-C_{18}$-Alkyl, $C_5-C_{12}$-Cycloalkyl, $C_1-C_{16}$-Alkylthio, $C_6-C_{14}$-Aryl, $C_6-C_{14}$-Aryl-$C_1-C_4$-alkyl, $C_1-C_{18}$-Alkoxy, $C_5-C_{12}$-Cycloalkoxi, $C_6-C_{14}$-Aryloxi, $C_6-C_{14}$-Aryl-$C_1-C_4$-alkyloxi und Halogen sowie |
| X | $C_1-C_4$-Alkylen, Schwefel, Dithio, Sauerstoff oder N-$C_1-C_4$-Alkyl |

darstellen können.

2. Verfahren gemäß Anspruch 1, dadurch gekennzeichnet, daß die hafterhöhende Verbindung in Mengen von 0,3 bis 10 Gewichtsteilen pro 100 Gewichtsteile Kautschuk zugesetzt wird.

3. Verfahren gemäß Anspruch 1, dadurch gekennzeichnet, daß die hafterhöhende Verbindung in Mengen von 0,5 bis 5 Gewichtsteilen pro 100 Gewichtsteile Kautschuk zugesetzt wird.

4. Verfahren nach Ansprüchen 1—3, dadurch gekennzeichnet, daß in der hafterhöhenden Verbindung der Formel (1) die Reste $R_1$, $R_2$, $R_4$ und $R_5$ Wasserstoff und der Rest $R_3$ $C_6-C_{12}$-Alkyl oder $C_6-C_{14}$-Aryl-$C_1-C_4$-alkyl darstellen.

5. Verfahren nach Anspruch 1—3, dadurch gekennzeichnet, daß in der hafterhöhenden Verbindung der Formel (2) entweder die Reste $R_6$, $R_7$, $R_{10}$ und $R_{11}$ Wasserstoff und die Reste $R_8$ und $R_9$ $C_1$—$C_4$-Alkyl, Benzyl oder Halogen oder die Reste $R_6$, $R_8$, $R_9$ und $R_{11}$ $C_1$—$C_4$-Alkyl oder Halogen und die Reste $R_7$ und $R_{10}$ Wasserstoff, $C_1$—$C_4$-Alkyl, Phenyl oder Halogen darstellen.

## Claims

1. Process for increasing the strength of adhesion between rubber and metal by adding an adhesion-increasing compound, optionally a formaldehyde-releasing compound and optionally a resorcinol compound to the rubber, followed by vulcanisation, characterised in that a compound of the formulae 1 or 2

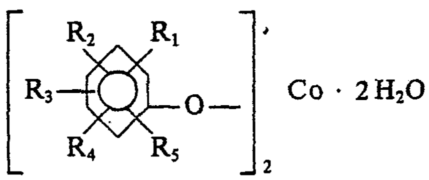

(1)

or

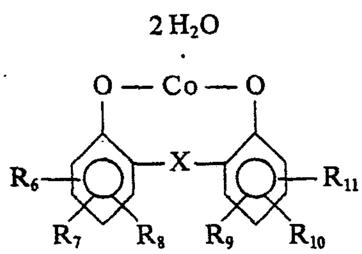

(2)

is added as the adhesion-increasing compound to the rubber in quantities of 0.1 to 20 parts by weight per 100 parts by weight of rubber, it being possible for the radicals $R_1$ to $R_{11}$ to represent hydrogen, hydroxyl, $C_1$—$C_{18}$-alkyl, $C_5$—$C_{12}$-cycloalkyl, $C_1$—$C_{18}$-alkylthio, $C_6$—$C_{14}$-aryl, $C_6$—$C_{14}$-aryl-$C_1$—$C_4$-alkyl, $C_1$—$C_{18}$-alkoxy, $C_5$—$C_{12}$-cycloalkoxy, $C_6$—$C_{14}$-aryloxy, $C_6$—$C_{14}$ -aryl-$C_1$—$C_4$-alkyloxy and halogen and for X to represent $C_1$—$C_4$-alkylene, sulphur, dithio, oxygen or N-$C_1$—$C_4$-alkyl.

2. Process according to claim 1, characterised in that the adhesion-increasing compound is added in quantities of 0.3 to 10 parts by weight per 100 parts by weight of rubber.

3. Process according to claim 1, characterised in that the adhesion-increasing compound is added in quantities of 0.5 to 5 parts by weight per 100 parts by weight of rubber.

4. Process according to claims 1—3, characterised in that in the adhesion-increasing compound of the formula (1) the radicals $R_1$, $R_2$, $R_4$ and $R_5$ represent hydrogen and the radical $R_3$ represents $C_6$—$C_{12}$-alkyl or $C_6$—$C_{14}$-aryl-$C_1$—$C_4$-alkyl.

5. Process according to claim 1—3, characterised in that in the adhesion-increasing compound of the formula (2) either the radicals $R_6$, $R_7$, $R_{10}$ and $R_{11}$ represent hydrogen and the radicals $R_8$ and $R_9$ represent $C_1$—$C_4$-alkyl, benzyl or halogen or the radicals $R_6$, $R_8$, $R_9$ and $R_{11}$ represent $C_1$—$C_4$-alkyl or halogen and the radicals $R_7$ and $R_{10}$ represent hydrogen, $C_1$—$C_4$-alkyl, phenyl or halogen.

## Revendications

1. Procédé pour augmenter la force d'adhérence entre du caoutchouc et du métal par addition d'un composé augmentant l'adhérence, éventuellement un composé cédant ou dégageant du formaldéhyde ainsi que, éventuellement, un composé du résorcinol au caoutchouc puis vulcanisation, procédé caractérisé en ce que l'on ajoute au caoutchouc, en des quantités de 0,1 à 20 parties en poids pour 100 parties de caoutchouc, comme composé augmentant l'adhérence, un composé répondant aux formules 1 ou 2:

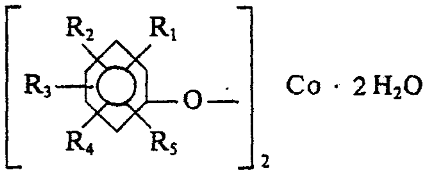

(1)

ou

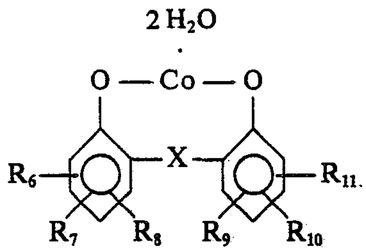

(2)

dans lesquelles les radicaux

$R_1$ à $R_{11}$ peuvent représenter de l'hydrogène, un groupe hydroxyle, alkyle en $C_1-C_{18}$, cycloalkyle en $C_5-C_{12}$, alkylthio en $C_1-C_{16}$, aryle en $C_6-C_{14}$, aryl(en $C_6-C_{14}$)-alkyle en $C_1-C_4$, alcoxy en $C_1-C_{18}$, cycloalcoxy en $C_5-C_{12}$, aryloxy en $C_6-C_{14}$, aryl(en $C_6-C_{14}$)-alkyloxy en $C_1$ et $C_4$ et halogéno, et

X peut représenter un groupe alkylène en $C_1-C_4$, du soufre, un groupe dithio, de l'oxygène ou un groupe N-alkyle en $C_1$ à $C_4$.

2. Procédé selon la revendication 1, caractérisé en ce qu'on ajoute le composé destiné à augmenter l'adhérence en des quantités de 0,3 à 10 parties en poids pour 100 parties en poids de caoutchouc.

3. Procédé selon la revendication 1, caractérisé en ce qu'on ajoute le composé, destiné à élever l'adhérence, en des quantités de 0,5 à 5 parties en poids pour 100 parties en poids du caoutchouc.

4. Procédé selon les revendications 1 à 3, caractérisé en ce que, dans le composé de formule (1) destiné à augmenter l'adhérence, les radicaux $R_1$, $R_2$, $R_4$ et $R_5$ représentent de l'hydrogène et le radical $R_3$ représente un groupe alkyle en $C_6-C_{12}$ ou aryl(en $C_6-C_{14}$)-alkyle en $C_1-C_4$.

5. Procédé selon les revendications 1 à 3, caractérisé en ce que, dans le composé, destiné à augmenter l'adhérence, de formule (2), les radicaux $R_6$, $R_7$, $R_{10}$ et $R_{11}$ représentent de l'hydrogène et les radicaux $R_8$ et $R_9$ un groupe alkyle en $C_1-C_4$, benzyle ou de l'halogène, ou bien les radicaux $R_6$, $R_8$, $R_9$ et $R_{11}$ représentent un groupe alkyle en $C_1$ à $C_4$ ou de l'halogène et les radicaux $R_7$ et $R_{10}$ représentent de l'hydrogène, un groupe alkyle en $C_1-C_4$, phényle ou un halogène.